# EUROPEAN PATENT APPLICATION

(11) **EP 3 832 830 A1**
(43) Date of publication of application: **09.06.2021**
(21) Application number: 20000430.7
(22) Date of filing: 26.11.2020
(51) Int. Cl.: H02J 3/28, H02J 15/00, F15B 1/04

(54) **OPTIMIZED ENERGY ACCUMULATION SYSTEM AND RELATED METHOD**

(30) Priority: 06.12.2019 IT 201900023262
(71) Applicant: Università degli Studi di Roma "La Sapienza", 00185 Roma (IT)
(72) Inventor: VALLATI, Andrea, 00199 ROMA (IT)
(74) Representative: Garavelli, Paolo

(57) **Abstract**

An optimized energy storage system (1) is described, designed to store and supply electrical and thermal energy simultaneously, and to be equipped with at least one heat exchanger (3) arranged on the external surface of at least one accumulation means (5) of the system (1) designed to recover a quantity of heat produced during an electrical energy storage within the accumulation means (5) of the system (1).

## Description

The present invention refers to an optimized energy storage system, in particular a system for the simultaneous storage and supply of electrical and thermal energy.

The present invention also relates to a method for accumulating and simultaneously supplying electrical and thermal energy, by means of the optimized energy storage system.

A plurality of chemical, electrochemical, electrical and mechanical electrical energy storage systems are known to the art, such as: vertical-axis flywheels arranged in sturdy cylindrical containers in which a certain degree of vacuum is maintained in order to reduce noise and aerodynamic friction of the rotor, thanks also to the adoption of magnetic bearings, through the use of a converter, the rotor transfers energy to the network in the form of alternating current with variable high frequency, suitable only for powers up to 500 kW; accumulation systems by storing hydrogen in pressurized containers, characterized by high costs, also the accumulation of hydrogen in underground plants, is convenient for the treatment of large quantities or for long periods; currently there are numerous underground storage systems in Germany, France, Great Britain and Norway; compressed air storage systems using compressors powered by low-cost electricity produced at night: the compressed air is stored in hermetic underground cavities, at a pressure of 70-100 bar, the compressed air thus obtained and stored is generally used in traditional gas turbine systems or for pneumatic drives in various production lines, in particular automatisms. These systems have a good storage capacity: from 2 to 3 kWh/m³ of underground tank compared to known hydroelectric storage systems which have an energy density of just 0.3 kWh/m³ of water tank, but have a higher energy efficiency; finally, hydroelectric systems based on pumping water that use two reservoirs-basins placed at different altitudes: in the hours in which the energy produced is greater than the energy required, the water is pumped from the lower tank to the upper tank, while in the peak demand the water accumulated upstream is used to produce electricity, normally used for the operation, regulation and rationalization of electricity transmission networks.

It is evident that an optimized energy storage system is not known, designed to simultaneously provide electrical and thermal energy, allowing the recovery of the amount of heat developed during the energy storage phase, and allowing its use in further applications.

Object of the present invention is solving the aforementioned prior art problems by providing an optimized energy storage system, designed to simultaneously accumulate and supply electrical and thermal energy.

Another object is providing a method for the simultaneous storage and supply of electrical and thermal energy.

The above and other objects and advantages of the invention, as will appear from the following description, are achieved with an optimized energy storage system and a method of accumulation and simultaneous supply of electrical and thermal energy as claimed in the respective independent claims. Preferred embodiments and non-trivial variants of the present invention form the subject of the dependent claims.

It is understood that all the attached claims form an integral part of the present description.

It will be immediately obvious that innumerable variations and modifications (for example relating to shape, dimensions, arrangements and parts with equivalent functionality) can be made to what has been described without departing from the scope of the invention as appears from the attached claims.

The present invention will be better described by some preferred embodiments, provided by way of non-limiting example, with reference to the attached drawings, in which:
- FIG. 1 shows a front view of a preferred embodiment of the system according to the present invention;
- FIG. 2 to 7 show a schematic diagram of the operation of the system according to the present invention; and
- FIG. 8, 9, 10, 11 show the graphs of a simulation of the system according to the present invention.

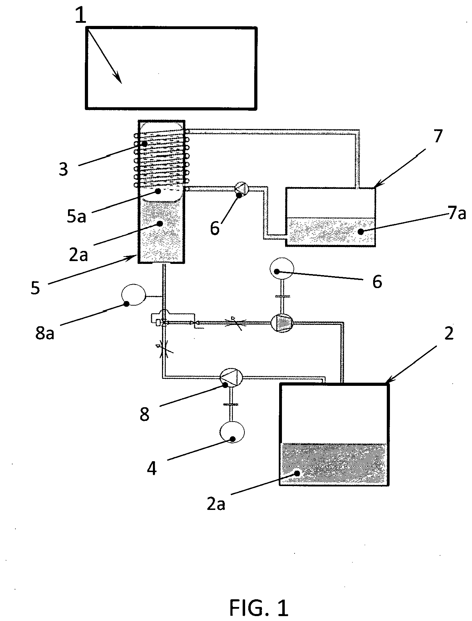

Referring to FIG. 1, an optimized energy storage system 1, according to the present invention, is designed to simultaneously store and supply electrical and thermal energy as needed, and is mainly equipped with at least one heat exchanger 3 arranged on the outer surface of at least one accumulation means 5 of the system 1 designed to recover a quantity of heat developed during the storage of the quantity of electrical energy inside the accumulation means 5 of the system 1.

Advantageously, the energy storage system 1, according to the present invention, comprises:
- at least one container means 2, such as, for example, a tank or other similar, designed to contain inside it a fluid 2a, such as, for example, oil, or water, or the like;
- the accumulation means 5, such as, for example, a bladder accumulator, or a piston accumulator, or other similar, designed to contain inside it a gas 5a, such as, for example, nitrogen, or other similar;
- the heat exchanger 3 arranged on the external surface of the accumulation means 5, preferably spirally arranged on the external surface of the accumulation means 5;
- at least one hydraulic means 4, such as, for example, a pump or other similar, designed to facilitate the passage of the fluid 2a contained in the container means 2 into the accumulation means 5 and inducing a compression of the gas 5a contained in the accumulation means 5, and consequently the accumulation of electrical energy inside the accumulation means 5;
- at least one hydraulic device 6, equipped with a turbine, such as, for example, a Pelton turbine or other similar one, and an electric generator, designed to receive the fluid 2a coming from the accumulation means 5 and pressurized following the compression of the gas 5a disposed in the accumulation means 5 of the system 1, with a pressure value comprised in a range between 1 and 550 KW, such as to induce the activation of this turbine physically coupled to the electric generator, producing electrical energy;
- at least one means 7 for introducing and collecting water 7a, designed to introduce water 7a inside a tubular element arranged inside the heat exchanger 3, and to collect a quantity of heated water following a transfer and absorption from part of the water 7a of a quantity of heat produced during the compression of the gas 5; and
- a plurality of adjustment elements 8, such as, for example, two-way or three-way valves, and at least one flow sensor 8a, designed to manage the flow of the fluid 2a from the container means 2 to the accumulation means 5 during the compression of the gas 5a, and from the accumulation means 5 to the hydraulic device 6 during a decompression of the gas 5a, and the flow of water 7a from the inlet and collection means 7 to the heat exchanger 3 during the compression of the gas 5a and from the heat exchanger 3 to the injection and collection means 7 during the decompression of the gas 5a.

Advantageously, the heat exchanger 3 is equipped internally with a tubular element, such as, for example, a coil or other similar, immersed in a liquid, such as, for example, water, designed to absorb the amount of heat produced during compression of the gas 5a contained within the accumulation means 5, increasing the efficiency of compression of the gas 5a, making it ideally isothermal, and allowing the quantity of heat absorbed to be reused, transferring it to the water 7a introduced into the tubular element of the heat exchanger 3 by means of the inlet and collection means 7 and the plurality of regulating elements 8, and favoring the heating and collection of the water 7a inside the inlet and collection means 7, making it usable if necessary.

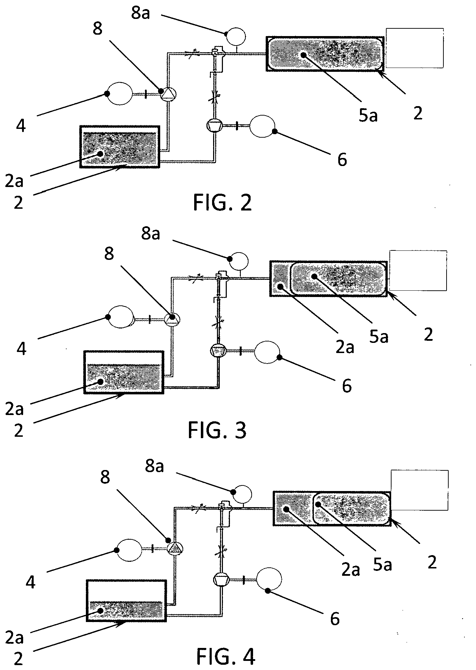

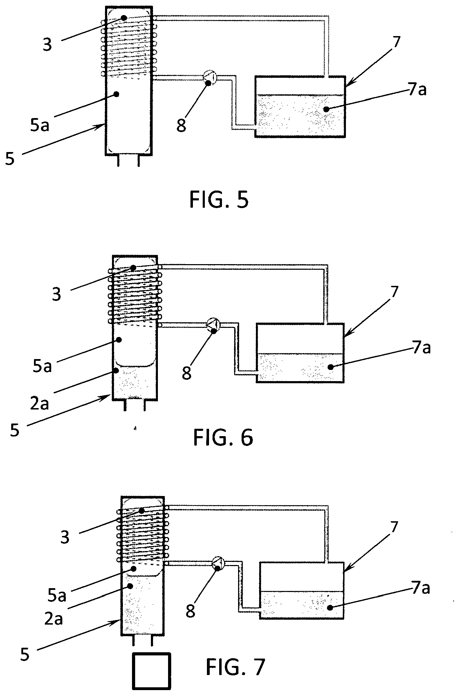

A method is also described for the accumulation and simultaneous supply of electrical and thermal energy through the energy storage system 1, wherein this method includes the steps of:
- preparation of system 1;
- activation of the hydraulic means 4 and of the plurality of adjustment elements 8, and induction of the passage of the fluid 2a from the container means 2 to the accumulation means 5;
- gradual compression of the gas 5a placed inside the accumulation means 5; as shown in FIG. 2, 3, and 4;
- simultaneously as shown in FIGS. 5, 6, and 7 activation of the heat exchanger 3, and induction of the passage of water 7a from the input and collection means 7 in the tubular element placed inside the heat exchanger 3;
- complete compression of the gas 5a and stabilization of a plurality of physical parameters;
- transfer and absorption of the amount of heat produced during the gradual compression of the gas 5a from the water 7a circulating in the tubular element of the heat exchanger 3, and obtaining a quantity of heated water;
- collection of the quantity of heated water in the injection and collection means 7;
- production of thermal energy;
- pressurization of the fluid 2a inside the accumulation means 5 with a pressure value ranging from 1 to 550 KW, and obtaining the pressurized fluid 2a;
- activation of the hydraulic device 6, and passage of the pressurized fluid 2a from the accumulation means 5 to the turbine of the hydraulic device 6, causing the activation of the turbine and the electrical generator physically connected to the turbine, and simultaneous gradual decompression of the gas 5a; and
- electricity generation.

Below, a simulation of the system will be provided with the aid of a suitably calibrated mathematical model, providing an optimization of the physical dimensions and technical characteristics of the accumulation means, in order to maximize the temperature of the water collected inside. of the heat exchanger.

The following initial parameters have been defined for the simulation:
accumulation means with the following initial dimensions: h = 1m and base surface S = 0.038 m² and with a volume equal to 0.0298 m³;
gas present inside the accumulation means with a mass equal to 0.0943 kg;
oil with a mass flow rate of 0.055 Kg/s;
total duration of the gas compression and decompression phase 5 min;
duration of the temporal interruption between the compression and decompression phase of the gas 210 min;
thermal transmittance of the accumulation means under pressure equal to 5.78 W/(m²*K)
heat exchanger consisting of a copper coil insulated externally by 0.05m insulation;
initial gas pressure value inside the accumulation means equal to 2.8 bar;
ambient temperature 298.15 °K;
initial gas temperature 298.15 °K; and
initial water temperature 298.15 °K.

To maximize the temperature of the water collected inside the heat exchanger, the accumulation volume was increased by increasing the height of the container, and the initial pressure of the gas inside the container was also varied, keeping the ratio fixed compression equal to 2.5.

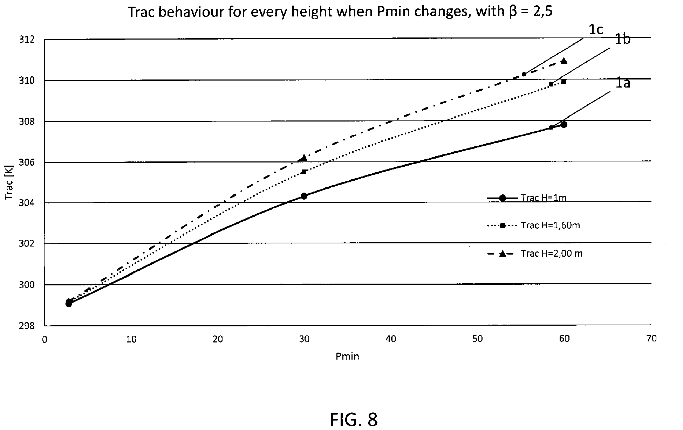

FIG. 8 shows graphs 1a, 1b, 1c of the variation of the water temperature induced inside the heat exchanger, the variation of the water temperature is indicated on the ordinates axis during the gas compression phase inside the accumulation means, as a function of the height values a = 1m, b = 1.60, c = 2.00 of the accumulation means, as the x value of the pressure varies in a range equal to 2.8 bar < x < 70 bar indicated on the abscissa axis.

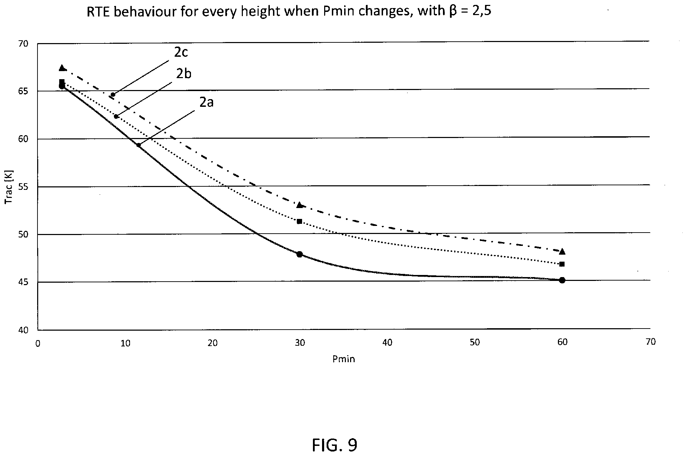

FIG. 9 shows the graphs 2a, 2b, 3c of the variation of the energy efficiency of the system as a function of the variation of the water temperature on the ordinate axis during the compression phase of the gas inside the accumulation means, as a function of the height values a = 1m, b = 1.60, c = 2.00 of the accumulation means as the x value of the pressure varies in a range of 2.8 bar < x < 70 bar indicated on the abscissa axis.

It is also evident by comparing FIGS. 8 and 9 as a function of the height values a = 1m, b = 1.60, c = 2.00 of the accumulation means, as when the gas pressure increases, the temperature of the water induced inside the heat exchanger increases and a decrease in the energy efficiency of the system.

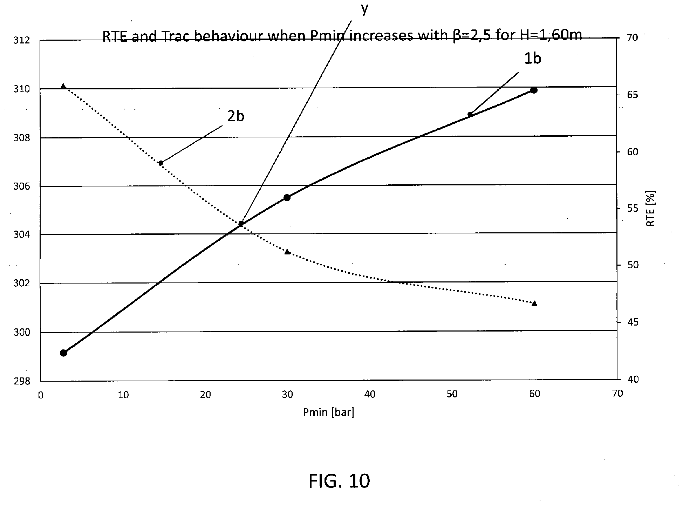

FIG. 10 shows the optimal value y of the water temperature induced inside the heat exchanger, obtained from the intersection of graph 1b of the variation of the water temperature with graph 2b of the variation of the energy efficiency of the system, relative to the accumulation means with a height value b = 1.60, as the pressure x value varies in a range of 2.8 bar < x < 70 bar indicated on the abscissa axis, depending on the variation of the water temperature indicated on the ordinates axis.

Consequently, it is evident that by increasing the height of the accumulation means, local improvements are obtained for each parameter, but with the same height of the accumulation means, an excessive increase in the initial pressure value would affect the energy efficiency of the system.

In particular, from the performed simulation, it is evident that as the height of the accumulation means varies, the optimal value shifts to the right as the height of the accumulation means increases, with a variation in the energy efficiency of the system, and a variation of the water temperature induced inside the heat exchanger advantageous.

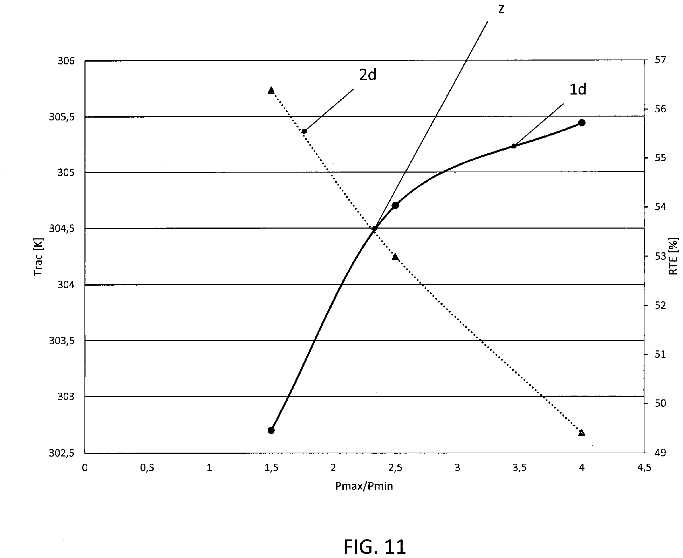

FIG. 11 shows the optimal value z obtained from the intersection of graph 1d of the variation of the water temperature with graph 2d of the variation of the energy efficiency of the system, relative to the accumulation means with a height value b = 1.60, as the value relating to the compression ratio between the maximum pressure and the minimum pressure indicated on the abscissa axis, according to the variation of the water temperature indicated on the ordinate axis, identifying a value relating to the optimal compression ratio equal to 2 5.

## Claims

1. Optimized energy storage system (1), **characterized in that** it is designed to simultaneously store and supply electrical and thermal energy, and is equipped with:
- at least one heat exchanger (3) arranged in a spiral on the external surface of at least one accumulation means (5) of said system (1) equipped internally with at least one tubular element immersed in a liquid, said tubular element being designed to absorb said quantity of heat produced during a compression of a gas (5a) contained within said accumulation means (5) and to transfer said quantity of heat to the water (7a) introduced into said tubular element of said accumulation means (5), by means of at least one input and collection means (7) and a plurality of regulating elements (8) favoring the heating and collection of water (7a) inside said input and collection means (7), making it usable if necessary;
- said means for introducing and collecting water (7a), designed to introduce water (7a) into said tubular element arranged inside said heat exchanger (3), and to collect a quantity of heated water following a transfer and absorption by water (7a) of said quantity of heat produced during said compression of said gas (5a).

2. System (1) according to the preceding claim, **characterized in that** it further comprises:
- at least one half container (2), designed to contain a fluid (2a) inside;
- said accumulation means (5), designed to contain a gas (5a) inside;
- said heat exchanger (3), arranged on the external surface of said accumulation means (5);
- at least one hydraulic means (4), designed to enable the passage of said fluid (2a) contained in said container means (2) into said accumulation means (5), and inducing said compression of said gas (5a) contained in the accumulation means (5), and consequently said accumulation of electrical energy inside said accumulation means (5);
- at least one hydraulic device (6), equipped with at least one turbine, and one electric generator, designed to receive said fluid (2a) coming from said accumulation means (5), and pressurized following said compression of said gas (5a) arranged in said accumulation means (5) of said system (1), inducing the activation of said turbine physically coupled to said electric generator, producing electric energy;
- said plurality of adjustment elements (8), and at least one flow sensor (8a), designed to manage the flow of said fluid (2a) from said container means (2) to said accumulation means (5) during said compression of said gas (5a), and from said accumulation means (5) to said hydraulic device (6) during a decompression of the gas (5a), and the flow of water (7a) from said inlet and collection means (7) to said heat exchanger (3) during said compression of said gas (5a) and from said heat exchanger (3) to said inlet and collection means (7) during said decompression of said gas (5a).

3. Method of accumulation and simultaneous supply of electrical and thermal energy by means of said system (1) according to any one of the preceding claims, said method comprising the steps of:
- preparation of said system (1)
- activation of said hydraulic means (4) and of said plurality of adjustment elements (8), and induction of the passage of said fluid (2a) from said container means (2) to said accumulation means (5) ;
- gradual compression of said gas (5a) placed inside said accumulation means (5);
- simultaneous activation of said heat exchanger (3), and induction of the passage of water (7a) from said means of entry and collection (7) in said tubular element arranged inside said heat exchanger (3) ;
- complete compression of said gas (5a) and stabilization of a plurality of physical parameters;
- transfer and absorption of said quantity of heat produced during said gradual compression of said gas (5a) by the water (7a) circulating in said tubular element of said quantity of heated water;
- collection of said quantity of heated water in said input and collection means (7);
- production of said thermal energy;
- pressurization of said fluid (2a) inside said accumulation means (5) obtaining said hydraulic device (6), and passage of said pressurized fluid (2a) from said accumulation means (5) to said hydraulic device (6) inducing the activation of said turbine and of said electric generator, and simultaneous gradual decompression of said gas (5a); and
- production of said electricity.
